# EUROPÄISCHE PATENTSCHRIFT

(11) **EP 0 552 706 B1**
(45) Veröffentlichungstag und Bekanntmachung des Hinweises auf die Patenterteilung: **04.10.1995**
(21) Anmeldenummer: 93100695.1
(22) Anmeldetag: 19.01.1993
(51) Int. Cl.: B01D 46/18, B01D 39/12, B60R 21/26

(54) **Filtervorrichtung zum Filtern einer Gasströmung**
Filtration device for gas stream filtration
Installation de filtrage d'un courant de gaz

(30) Priorität: 23.01.1992 DE 4201741
(43) Veröffentlichungstag der Anmeldung: 28.07.1993
(73) Patentinhaber: Dynamit Nobel Aktiengesellschaft, 53839 Troisdorf (DE)
(72) Erfinder: Kraft, Josef, W-8438 Berg (DE); Scheiderer, Gerrit, W-8510 Fürth (DE)

(56) Entgegenhaltungen:
- EP-A- 0 134 002
- EP-A- 0 251 620
- EP-A- 0 325 111
- EP-A- 0 332 325

## Beschreibung

Die Erfindung betrifft eine Filtervorrichtung zum Filtern einer Gasströmung, insbesondere zum Filtern des von einem vorzugsweise Rund- oder Rohr-Gasgenerator für ein Aufprallschutzkissen erzeugten Gases, mit einem von dem Gas durchströmbaren Filterelement, das mehrere in Strömungsrichtung aufeinanderfolgende Filtermateriallagen unterschiedlicher Durchlässigkeit aufweist.

Aufprallschutzkissen zum Schutz der Insassen von Kraftfahrzeugen (derartige Unfallschutzeinrichtungen werden auch als "Airbag"-Systeme bezeichnet) werden im Bedarfsfall durch unter Druck stehende Gase gefüllt, die bei der Verbrennung einer gasentwickelnden Ladung in einem Gasgenerator erzeugt werden. Zur Zurückhaltung der bei der Verbrennung des gasentwickelnden Materials entstehenden Schlacke und zur Kühlung der Schlacke sowie der Verbrennungsgase durchströmen diese ein Filterelement, das im Gasgenerator angeordnet ist. Das Filterelement besteht aus mehreren in Strömungsrichtung aufeinanderfolgenden Filtermateriallagen unterschiedlicher Durchlässigkeit. Die EP-A-0 332 325 beschreibt ein Filter mit mehreren Lagen unterschiedlicher Durchlässigkeit. Als Filterelement bzw. als Filterelementlagen werden Drahtgewebe unterschiedlicher Maschenweiten und Feinfiltervliese aus Metallfasern verwendet. Bei Rund- und Rohr-Gasgeneratoren weisen die einzelnen Drahtgewebelagen des Filterelementes Rohr-, Napf-, Ring- oder Hutform unterschiedlicher Durchmesser auf. Die einzelnen derart geformten Drahtgewebe bzw. Feinfiltervliese werden dabei als einzelne Zylinder oder Formteile vorgefertigt und dann zusammengesetzt. Die Herstellung eines derartig aufgebauten Filterelementes ist verhältnismäßig aufwendig und daher kostenintensiv.

Der Erfindung liegt die Aufgabe zugrunde, eine Filtervorrichtung zum Filtern von insbesondere des von einem Gasgenerator für ein Kraftfahrzeug-Aufprallschutzkissen erzeugten Gases zu schaffen, dessen Filterelement kostengünstig herstellbar ist.

Zur Lösung dieser Aufgabe wird mit der Erfindung eine Filtervorrichtung der eingangs genannten Art vorgeschlagen, dessen Filterelement als ein Wickelkörper ausgebildet ist, der durch Wickeln einer Filtermaterialbahn entsteht, die mehrere Filtermaterial-Abschnitte unterschiedlicher Durchlässigkeit aufweist.

Bei dem Filterelement der erfindungsgemäßen Filtervorrichtung handelt es sich um einen Wickelkörper; die Bahn bzw. der Streifen, der zu dem Wickelkörper aufgewickelt ist, besteht dabei aus Filtermaterial. Diese Filtermaterialbahn weist mehrere Abschnitte bzw. Bereiche auf, die aus unterschiedlichen Filtermaterialien mit unterschiedlicher Durchlässigkeit, d.h. unterschiedlicher Filterwirkung bestehen. Die Filtermaterialbahn kann ein- oder mehrlagig ausgebildet sein. Bei einlagiger Filtermaterialbahn folgen die einzelnen Filtermaterialbahn-Abschnitte in Längserstreckung der Filtermaterialbahn aufeinander, so daß der Wickelkörper einzelne, den unterschiedlichen Filtermaterial-Abschnitten entsprechende Wickellagen aufweist. Bei mehrlagiger Ausbildung der Filtermaterialbahn kann jede Lage durchgehend aus ein und demselben Filtermaterial bestehen; ebenso ist es aber auch möglich, daß eine der Lagen mehrere in Längserstreckung der Filtermaterialbahn nebeneinanderliegend angeordnete Abschnitte unterschiedlichen Filtermaterials aufweist.

Wie bereits oben erwähnt, handelt es sich bei den zur Gasfilterung eingesetzten Filtermaterialien um Edelstahl-Drahtgewebe unterschiedlicher Maschenweiten als Grob- und Oberflächenfilter und ggf. zusätzlich um Edelstahl-Metallfaservliese als Fein- und Tiefenfilter. Diese unterschiedlichen Drahtgewebe bzw. Metallfaservliese können als Bahnmaterial bzw. als Bahnmaterialabschnitte einfach zu einer ein- oder mehrlagigen Bahn zusammengefügt bzw. zusammengesetzt werden. Von Vorteil dabei ist, daß die Drahtgewebe und Metallfaservliese als viereckige nicht geformte flache Materialabschnitte vorliegen, deren Handhabung und Zusammenfügung vergleichsweise einfach ist. Die derart zusammengestellte Filtermaterialbahn wird dann anschließend zu einem Wickelkörper gewickelt, der in den Gasgenerator eingesetzt wird. Eine Formgebung jeder einzelnen Filtermateriallage des Filterelement-Wickelkörpers der erfindungsgemäßen Filtervorrichtung ist nicht erforderlich; diese Formgebung entsteht vielmehr automatisch mit dem Wickelvorgang.

Vorteilhafterweise ist die Filtermaterialbahn derart gewickelt, daß der Filterelement-Wickelkörper bei Durchströmung des Gases radial von innen nach außen im wesentlichen unter Beibehaltung seines Außendurchmessers und seiner Wickelstruktur verdichtbar ist. Das von dem Filterelement von Schlacke und Partikeln zu reinigende Gas durchströmt den Wickelkörper bei einem Rund- oder Rohr-Gasgenerator von innen nach außen; denn das zylindrische Filterelement umgibt den Verbrennungsraum des Gasgenerators. Mit zunehmender Verbrennung des gasentwickelnden Materials entsteht eine volumenmäßig sich immer stärker vergrößerende Verbrennungsgasmenge. Damit steigt auch der auf den Wickelkörper wirkende Druck an. Der Wickelkörper ist von dem Gasgenerator-Gehäuse umgeben bzw. umschlossen, so daß ein Abwickeln der Filtermaterialbahn mit steigendem Druck der Gasströmung verhindert wird. Aufgrund der Struktur des Filterelementes als Wickelkörper ist es aber möglich, daß sich die einzelnen Wickellagen gegeneinander verschieben, mit der Folge, daß die einzelnen Wickellagen dichter gegeneinander gepreßt werden. Die "Dichtigkeit" des Filterelement-Wickelkörpers steigt also mit zunehmendem Druck des zu reinigenden Gases an. Mit dem Wickelkörper liegt also ein Filterelement vor, dessen Materialdurchlässigkeit (Schlacken-Partikel-, Kondensat- und Gasdurchlässigkeit) umgekehrt proportional zum Druck der Gasströmung ist. Genau dieses Verhalten des Filterelementes wird bei einem Gasgenerator gewünscht. Die Verdichtung der einzelnen Filterlagen eines Filterelementes ist insbesondere dann wünschenswert, wenn die Gasaustrittsstellen des Filterelements gegenüber den Gaseintrittsstellen in axialer Richtung versetzt angeordnet sind, wie dies bei Rund- und Rohrgasgeneratoren im allgemeinen der Fall ist. Das Filterelement eines derartigen Gasgenerators wird also auch in axialer Richtung durchströmt. In dieser Richtung kann bei der erfindungsgemäßen Filtervorrichtung eine mit steigendem Druck verbesserte Filterwirkung erzielt werden, da sich der Abstand der einzelnen Wickellagen aufgrund der Möglichkeit einer gewissen Verschiebung der einzelnen Wickellagen gegeneinander (gewisse Abwicklung des Wickelkörpers) verringert.

Bei Untersuchungen im Rahmen der Rohrgasgeneratorentwicklung konnte nachgewiesen werden, daß sich durch Aufwickeln von beispielsweise aneinandergeschweißten Drahtgeweben und Metall-Feinfiltervliesen eine wesentliche Verbesserung des Schlackenrückhalts erreichen ließe, als bei ineinandergesteckten, zuvor jeweils einzeln geschweißten Drahtgewebe- bzw. Feinfiltervlies-Zylindern. Der Schlackerückhalt konnte mit Hilfe des Filterelement-Wickelkörpers der erfindungsgemäßen Filtervorrichtung um das dreifache gegenüber den bekannten Filterelementen erhöht werden. Diese Verbesserung ist ganz eindeutig auf die Tatsache zurückzuführen, daß es sich aufgrund der Wickelstruktur eine Aufweitung des Filterelements bezüglich seines Innendurchmessers realisieren läßt, wobei der Außendurchmesser im wesentlichen unverändert bleibt, sich die Wandstärke des Wickelkörpers also unter Verringerung der Wickellagenabstände verringert. Dieses Phänomen läßt sich lediglich bei solchen zylindrischen Drahtgewebe/Metallfaservlies-Filterelementen realisieren, deren Aufbau trotz praktisch nicht vorhandener Dehnbarkeit der Filterelementlagen eine Aufweitung derselben zuläßt. Ein Filterelement, das aus einer gewickelten Drahtgewebe/Metallfaservlies-Bahn besteht, weist gerade diese Eigenschaft auf.

Damit sich jeder Filterbahnabschnitt über mindestens eine Wickellage erstreckt, sollten die Längen der einzelnen Filtermaterialabschnitte in Längserstreckung der Filtermaterialbahn jeweils entsprechend bemessen sein.

Vorteilhafterweise besteht die Filtermaterialbahn aus zwei Filtermateriallagen, von denen die eine Lage durchgehend aus ein und demselben Filtermaterial besteht und die zweite Lage ein zweites Filtermaterial aufweist. Beide Lagen der Filtermaterialbahn sind vorteilhafterweise an einem Ende fest miteinander verbunden, was beispielsweise durch Verschweißen erfolgt. Bei diesem Ende handelt es um das in Wickelrichtung erste Ende der Filtermaterialbahn. Dadurch ist eine relative Verschiebung der beiden Lagen beim Aufwickeln der Filtermaterialbahn möglich, ohne daß dies die Wickelstruktur negativ beeinflußt. Sofern eine Lage kürzer ist als die andere, sollte das in Aufwickelrichtung erste Ende der in Längserstreckung der Filtermaterialbahn kürzeren Lagen mit der anderen Lage fest verbunden sein.

Vorteilhafterweise besteht die zweite Lage aus mehreren Filtermaterialabschnitten unterschiedlicher Durchlässigkeit, die in Längserstreckung der Filtermaterialbahn nebeneinanderliegend angeordnet sind. Während die erste Lage der Filtermaterialbahn durchgehend aus ein und demselben Filtermaterial, beispielsweise einem Drahtgewebe bestimmter Maschenweite besteht, weist die zweite Filtermaterialbahnlage mehrere Drahtgewebeabschnitte unterschiedlicher Maschenweite und ggf. auch ein Metallfaservlies als Feinfilter auf. Die doppellagige Filtermaterialbahn wird derart aufgewickelt, daß die durchgehende erste (Drahtgewebe-)Lage radial innenliegend angeordnet ist. Bei einem derartigen Wickel besteht jede zweite Wickellage aus dem durchgehenden Drahtgewebe. Die dazwischen liegenden Wickellagen bestehen aus den Drahtgewebe- bzw. Metallfaservlies-Abschnitten der anderen Lage der Filtermaterialbahn. Wird als durchgehendes Drahtgewebe der ersten Lage ein vergleichsweise flexibles Gewebematerial verwendet, weist die zweite Lage vorteilhafterweise ein gegenüber dem Drahtgewebe der ersten Lage steiferes Drahtgewebe (beispielsweise sogenanntes "Tresse"-Material) auf; an den biegesteifen Drahtgewebe-Abschnitt schließt sich dann ein Metallfaservlies-Abschnitt an, wobei das Metallfaservlies mit einem angesinterten Drahtgewebe als Stütz- bzw. Tragschicht versehen ist. Beim Wickelvorgang sollte darauf geachtet werden, daß das angesinterte Drahtgewebe in Strömungsrichtung (unmittelbar) hinter dem Metallfaservlies angeordnet ist. Das angesinterte Drahtgewebe weist eine geringe Maschenweite auf und verhindert das Austreten der Metallfasern aus der Vliesschicht bei Gasdurchströmung.

Die Abschnitte der zweiten Lagen können mit der ersten Lage und/oder untereinander verbunden sein. Es ist aber auch ebenso denkbar, daß die Abschnitte der zweiten Lage lediglich lose auf der durchgehenden ersten Lage aufliegen, da sie bei aufgewickelter Filtermaterialbahn jeweils zwischen zwei aus dem Material der ersten Filtermaterialbahnlage bestehenden Wickellagen angeordnet sind und insoweit fixiert sind. Die erste Lage ist vorteilhafterweise um mindestens die Länge des Außenumfangs des Wickelkörpers länger als die zweite Filtermaterialbahnlage, damit die Außenwickellage des Wickelkörpers aus dem Drahtgewebe der ersten Filtermaterialbahnlage besteht und das Metallfaservlies mit angesintertem Drahtgewebe von außen umgibt. Die Abschnitte der zweiten Lage der Filtermaterialbahn sind mit ihren Kanten aneinanderstoßend nebeneinanderliegend angeordnet und ggf. untereinander verbunden. Die Längen der Filtermaterialabschnitte der zweiten Lage sind derart gewählt, daß sich bei aufgewickelter Filtermaterialbahn jeder Abschnitt auch nach der Gasdurchströmung des Wickels noch über mindestens 360° erstreckt, wobei die Übergangsbereiche der Abschnitte bei aufgewickelter Filtermaterialbahn in Umfangsrichtung vorzugsweise versetzt zueinander angeordnet sind, der Wickel also eine im wesentlichen zylindrische Form mit gleichmäßiger Dickenerstreckung aufweist.

Vorteilhafterweise sind die beiden Lagen an dem innenliegenden Filterbahnende des Wickelkörpers, von dem aus mit der Aufwicklung begonnen wird, miteinander verbunden. Die Abschnitte der zweiten Filtermaterialbahnlage sind ebenfalls untereinander verbunden. Die zweite Lage der Filtermaterialbahn weist ein mit dem Drahtgewebe der ersten Lage verbundenes Drahtgewebe auf, das eine geringer Maschenweite als das Drahtgewebe der ersten Filtermaterialbahnlage aufweist. An den Drahtgewebeabschnitt der zweiten Lage schließt sich das Metallfaservlies mit angesintertem Drahtgewebe an, das eine wesentlich geringere Maschenweite als die übrigen Drahtgewebe der ersten und zweite Lage aufweist. Dadurch, daß die erste Lage vorteilhafterweise um mindestens die Länge des Außenumfangs des Wickels länger ist als die zweite Lage, weist der Wickelkörper eine Außenwicklung aus dem Drahtgewebe der ersten Lage auf, die an dem an dem Metallfaservlies angesinterten Stütz-Drahtgewebe außen anliegt. Die Maschenweite eines derartigen Wickels nimmt also insgesamt betrachtet von innen nach außen ab. Während die Oberflächenfilter (die Drahtgewebelagen) innenliegend angeordnet sind, wird die vorletzte Wickellage von dem Tiefenfilter (Metallfaservlies) gebildet, der außen angeordnet ist und lediglich nach aus Stabilitätsgründen von einer Oberflächenfilterlage (Drahtgewebe der ersten Lage) umgeben ist.

Zur Verbesserung der Handhabung ist der Wickel vorteilhafterweise von einem zylindrischen gasdurchlässigen Mantel umgeben. Bei diesem Mantel handelt es sich vorzugsweise um einen zu einem Hohlzylinder geformten Filtermaterialkörper aus insbesondere Edelstahl. Aus Edelstahl bestehen auch vorteilhafterweise die Drahtgewebe- und Metallfaservlieslagen des Filterelementes. Der hohlzylindrische Mantel hält den Wickel zusammen, der aufgrund der Steifigkeit des Materials der Filtermaterialbahn zur Aufweitung neigt. Bei dem den Wickel zusammenhaltenden Mantel kann es sich aber auch um das zylindrische Gehäuse des Rund- oder Rohrgasgenerators handeln. Schließlich ist auch denkbar, daß der den Wickel umgebende hohlzylindrische Filtermaterialkörper aus Drahtgewebe in das Gehäuse des Gasgenerators eingesetzt wird, der Mantel also sozusagen aus dem zylindrischen Filtermaterialkörper und dem Gehäuse besteht. Das Gehäuse ist in seiner Wandung mit Löchern als Gasaustrittsöffnungen versehen.

Nachfolgend wird anhand der Figuren ein Ausführungsbeispiel der Erfindung näher erläutert. Im einzelnen zeigen:
- Fig. 1: einen Längsschnitt durch einen Doppelrohr-Gasgenerator mit zwischen den beiden Rohren angeordnetem Filterelement-Wickelkörper,
- Fig. 2: eine Draufsicht auf die zweilagige Filtermaterialbahn (Filterabwicklung) des Filterelement-Wickelkörpers, teilweise gebrochen,
- Fig. 3: einen Längsschnitt durch die Filtermaterialbahn gemäß Fig. 2 und
- Fig. 4: den Filterelement-Wickelkörper in eingebautem Zustand mit einem Drahtgewebe-Hohlzylinder zum Zusammenhalten des Wickelkörpers gemäß der Schnittlinie IV-IV der Fig. 1.

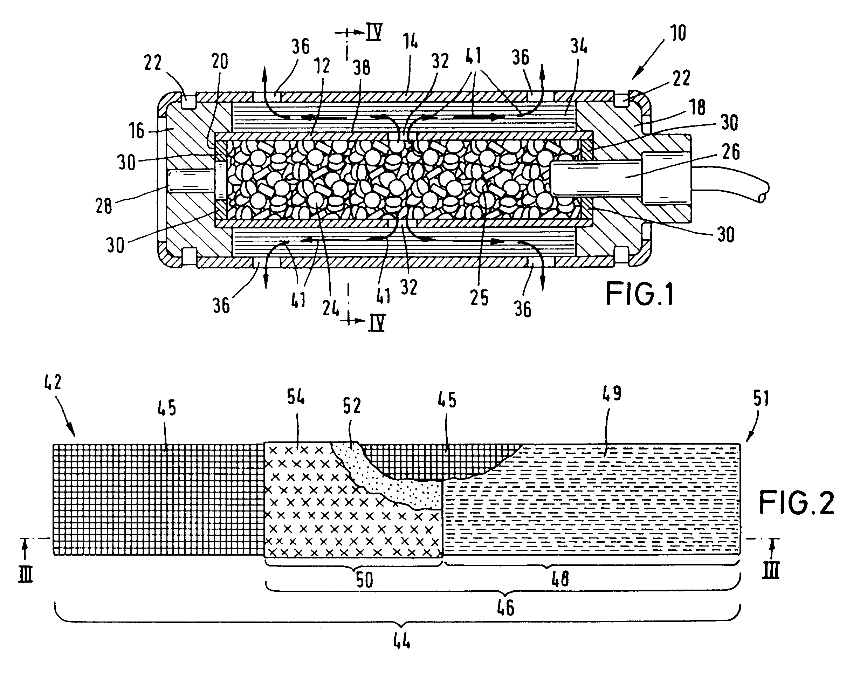

In Fig. 1 ist schematisch ein Doppelrohr-Gasgenerator 10 im Längsschnitt dargestellt. Der Gasgenerator 10 weist ein Innenrohr 12 und ein Außenrohr 14 auf, die koaxial zueinander angeordnet sind und unterschiedliche Durchmesser aufweisen. An den axialen Enden sind die beiden Rohre 12,14 durch gemeinsame Verschlußdeckel 16,18 verschlossen. Die Verschlußdeckel 16,18 weisen einander gegenüberliegende runde Innenausnehmungen 20 auf, in die die Enden des Innenrohres 12 eingetaucht sind. Die Verschlußdeckel 16,18 sind radial außen von den Enden des Außenrohres 14 umgeben; durch Verstemmung ist das Außenrohr 14 fest mit dem Verschlußdeckeln 16, 18 verbunden. Zu diesem Zweck weisen die Verschlußdeckel 16,18 Außenumfangsnuten 22 auf. Mittels Kerbwerkzeugen wird Material des Außenrohres 14 in diese Umfangsnuten 22 eingedrückt. Dabei entstehen gestanzte V-förmige Innenvorsprünge, die in die Umfangsnuten 22 hineinragen. Diese Art der Verbindung ist insbesondere widerstandsfähig gegenüber in axialer Richtung auf die Verschlußdeckel 16,18 wirkenden Kräften.

Das Innenrohr 12 ist mit gasentwickelnder Ladung 24 in Tabletten- oder Pelletform (in Fig. 1 lediglich angedeutet) ausgefüllt und bildet den Verbrennungsraum 25 des Gasgenerators 10. Durch den Verschlußdeckel 18 erstreckt sich in axialer Richtung des Rohrgasgenerators 10 eine elektrische Anzündeinheit 26 mit einer nicht dargestellten Anzündladung, die elektrisch gezündet wird. In dem anderen Verschlußdeckel 16 befindet sich eine Thermo-Sicherheitsanzündvorrichtung 28, die bei einer Überhitzung des Gasgenerators 10 das gasentwickelnde Material 24 zündet. Die freiliegenden Flächen der Verschlußdeckelausnehmungen 20 sind mit Keramikfilzen 30 - oder Geweben aus (gewirkten) Metallfasern versehen, die auf das gasentwickelnde Ladungsmaterial 24 eine gewisse Federkraft ausüben und die einzelnen Tabletten bzw. Pellets damit zusammenhalten. Bei auf dem Gasgenerator 10 wirkenden Erschütterungen sind damit Relativbewegungen der einzelnen Pellets und damit einem Abrieb Grenzen gesetzt.

In Höhe der Mitte der axialen Erstreckung des Innenrohres 12 ist dessen Umfang mit mehreren Durchgangsöffnungen 32 versehen, über die der Verbrennungsraum 25 mit dem Ringraum 34 zwischen den beiden Rohren 14,16 verbunden ist. In axialer Richtung versetzt zu den Durchgangsöffnungen 32 des Innenrohres 12 sind in den beiden axialen Endabschnitten des Außenrohres 14 mehrere Gasaustrittsöffnungen 36 ausgebildet. Der Ringraum 34 ist von einem Filterelement-Wickelkörper 38 ausgefüllt, der aus mehreren Drahtgeweben besteht. Der Aufbau dieses Filterelement-Wickelkörpers 38 wird anhand der Figuren 2 bis 4 erläutert.

Wie in Fig. 1 bei 40 angedeutet, treten bei Zündung der Anzündeinheit 26 Anzündschwaden in den Verbrennungsraum 25 hinein. Diese Anzündschwaden 40 zünden das gasentwickelnde Material 24, bei dessen Abbrand Verbrennungsgase sowie andere Verbrennungsprodukte entstehen. Diese festen und flüssigen anderen Verbrennungsprodukte gelangen zusammen mit den Verbrennungsgasen über die Öffnungen 32 des Innenrohres 12 in den Ringzwischenraum 34, wo sie von dem Filterelement 38 herausgefiltert und zurückgehalten werden. Der Gas- bzw. Materialströmungsverlauf ist in Fig. 1 bei 41 angedeutet. Neben der Filterfunktion soll das Filterelement 38 den Gasstrom sowie die flüssigen und festen Verbrennungsprodukte auch kühlen. Der derart weitestgehend von nichtgasförmigen Verbrennungsprodukten gereinigte Gasstrom tritt über die Öffnungen 36 im Außenrohr 14 aus dem Gasgenerator 10 heraus, um als Nutzgas ein (nicht dargestelltes) Aufprallschutzkissen im Armaturenbereich oder Lenkrad eines Kraftfahrzeuges zu füllen. Der zu reinigende Gasstrom durchströmt den Filterelement-Wickelkörper sowohl radial als auch axial (siehe in Fig. 1 bei 41), da die Öffnungen 32 und 36 in den Rohren 12 bzw. 14 zur Schaffung eines möglichst langen Strömungsweges innerhalb des Filterelementes 38 in axialer Richtung des Gasgenerators 10 versetzt zueinander angeordnet sind.

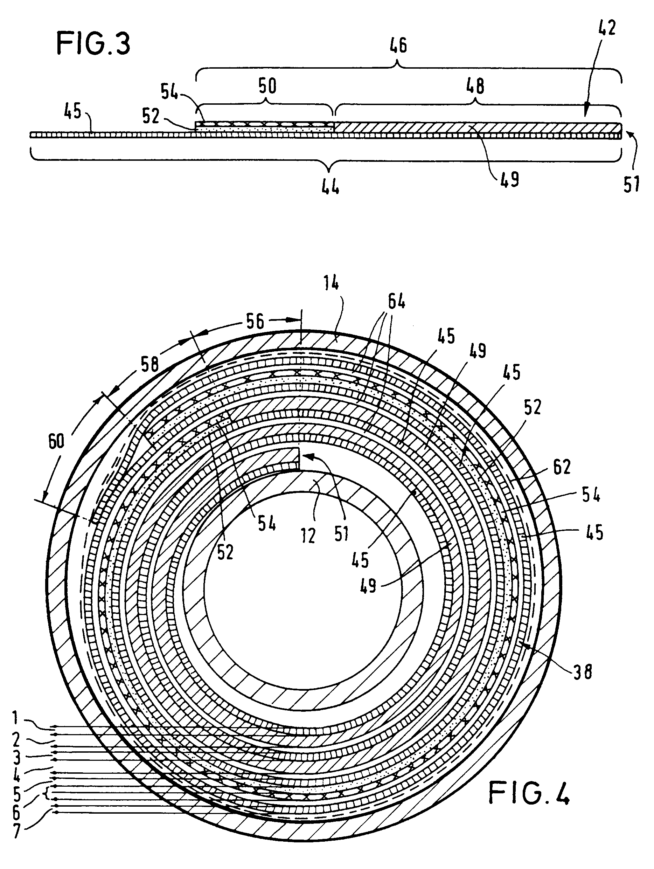

In den Figuren 2 und 3 sind eine Draufsicht und ein Längsschnitt durch eine zweilagige Filtermaterialbahn 42 dargestellt, aus der der Filterelement-Wickelkörper 38 durch Aufwickeln gebildet ist. Die Filtermaterialbahn 42 weist eine erste Lage 44 aus einem durchgehenden ersten Edelstahl-Drahtgewebe 45 mit einer ersten Maschenweite von beispielsweise 0,8 mm und einem Drahtdurchmesser von ca. 0,25 mm auf. Die Länge der ersten Filtermaterialbahnlage 44 (Erstreckung in Längsrichtung der Filtermaterialbahn 42) ist derart bemessen, daß der gewickelte Wickelkörper 38 insgesamt vier Wickellagen aufweist, die aus dem ersten Drahtgewebe der Lage 44 bestehen. Neben der ersten Lage 44 weist die Filtermaterialbahn 42 eine zweite Lage 46 auf, die aus einem ersten Filtermaterial-Abschnitt 48 und einem zweiten Filtermaterial-Abschnitt 50 zusammengesetzt ist. Bei dem ersten Abschnitt 48 handelt es sich um ein zweites Edelstahl-Drahtgewebe 49 mit einer zweiten Maschenweite, die kleiner ist als die Maschenweite des Drahtgewebes 45 der ersten Lage 44. Das Drahtgewebe 49 des ersten Abschnitts 48 der zweiten Filtermaterialbahnlage 46 ist biegesteifer als das Drahtgewebe 45 und weist beispielsweise eine Maschenweite von 8x85 mesh auf. Der Durchmesser der in Längserstreckung der Filtermaterialbahn 42 verlaufenden Kett-Drähte beträgt 0,36 mm, während die querverlaufenden Schuß-Drähte einen Durchmesser von 0,3 mm aufweisen. Die Maschenweitenangabe 8x85 mesh besagt, daß das Drahtgewebe 45 8 Kett-Drähte pro 25,4 mm (Zoll) und 85 Schuß-Drähte pro 25,4 mm (Zoll) aufweist. Das Drahtgewebe 49 des ersten Abschnittes 46 ist biegesteifer und weist eine geringere Maschenweite auf als das Drahtgewebe 45 der ersten Filtermaterialbahnlage 42. Bei dem Drahtgewebe 49 für den ersten Abschnitt 48 der zweiten Filtermaterialbahnlage 46 handelt es sich um sogenannte "Tresse".

Das Drahtgewebe 49 des ersten Abschnitts 48 der zweiten Filtermaterialbahn 46 ist mit seinem einen Ende mit einem der Enden der ersten Filtermaterialbahnlage 44 verbunden. Diese beiden miteinander verbundenen Enden bilden ein Ende 51 der Filtermaterialbahn 42. Die Verbindung erfolgt beispielsweise durch Verschweißen, was am linken Ende 51 der in Fig. 2 dargestellten Filtermaterialbahn 42 angedeutet ist. Das andere in Längserstreckung der Filtermaterialbahn 42 liegende Ende des ersten Abschnitts 48 ist mit dem zweiten Abschnitt 50 verschweißt. Dabei überlappen sich die miteinander verbundenen Enden der beiden Abschnitte 50,48 oder aber die beiden Abschnitte liegen "Kante an Kante". Der zweite Abschnitt 50 ist seinerseits zweilagig aufgebaut und weist eine erste Lage Metallfaservlies 52 und ein Edelstahl-Drahtgewebe 54 auf, wobei das Drahtgewebe 54 an dem Metallfaservlies 52 angesintert ist. Das Drahtgewebe 54 weist eine Maschenweite von beispielsweise 0,4 mm und einen Drahtdurchmesser von z.B. 0,125 mm bis 0,25 mm auf. Das Metallfaservlies 52 weist eine Filtereinheit von z.B. ca. 60 µm auf und ist zwischen dem Drahtgewebe 45 der ersten Lage 44 und dem Drahtgewebe 54 des zweiten Abschnitts 50 der zweiten Lage 46 der Filtermaterialbahn 42 angeordnet. Die erste Filtermaterialbahnlage 44 weist eine größere Längserstreckung auf als die zweite Lage 46; das Drahtgewebe 45 der ersten Lage 44 steht also über dasjenige freie Ende des Verbundes aus Metallfaservlies 52 und Drahtgewebe 54 über, das dem Drahtgewebe 49 des ersten Abschnitts 48 der zweiten Filtermaterialbahnlage 46 abgewandt ist.

Die in den Figuren 2 und 3 dargestellte Filtermaterialbahn 42 wird zu dem in Fig. 4 dargestellen Wickelkörper 38 aufgewickelt. Dabei wird mit dem Aufwickeln an dem in Fig. 2 links dargestellten Ende 51 der Filtermaterialbahn 42 begonnen an den die beiden Lagen 44,46 miteinander abschließen und verbunden sind. Diese Verbindung ist nicht zwingend erforderlich, erleichtert jedoch das Aufwickeln, da ohne zusätzliche Maßnahmen gewährleistet ist, daß die beiden Lagen 44,46 nicht gegeneinander verrutschen. Beim Aufwickeln liegt die zweite Filtermaterialbahnlage 42 oben, die erste Filtermaterialbahnlage 44 bildet also die innerste Wickellage des Wickelkörpers 38. Die Länge des ersten Abschnitts 48 der zweiten Filtermaterialbahnlage 46 ist derart bemessen, daß sie sich zusammen mit der ersten Filtermaterialbahnlage 44 über mehr als zwei Wickellagen des Wickelkörpers 38 erstreckt. Wie anhand von Fig. 4 zu erkennen ist, erstreckt sich das Drahtgewebe 49 des ersten Abschnittes 48 der zweiten Filtermaterialbahnlage 46 über die zweite und vierte Wickellage, während die erste und dritte Wickellage von dem Drahtgewebe 45 der ersten Filtermaterialbahnlage 44 gebildet wird. Das mit dem Verbund aus Metallfaservlies 52 und Drahtgewebe 54 verbundene Ende des Drahtgewebes 49 des zweiten Abschnittes 48 überlappt dabei das innenliegende Ende der aufgewickelten Filtermaterialbahn 42 um den bei 56 angedeuteten Winkelbereich. Die Länge des zweiten Abschnittes 50 der zweiten Filtermaterialbahnlage 46 ist derart bemessen, daß der Verbund aus Metallfaservlies 52 und Drahtgewebe 54 sich über eine Wickellage, nämlich die sechste Wicklung des Wickelkörpers 38 erstreckt, wobei auch die Enden des zweiten Abschnittes 50 einander überlappen, und zwar um den in Fig. 4 bei 58 angedeuteten Winkelbereich. Die Länge der ersten Filtermaterialbahnlage 44 ist demgegenüber derart gewählt, daß sich das erste Drahtgewebe 45 über insgesamt vier Wicklungen des Wickelkörpers 38 erstreckt, wobei es sich um die Wickellagen 1, 3, 5 und 7 handelt. Die Außenwicklung des Wickelkörpers 38 (Wickellage 7) wird dabei von dem Drahtgewebe 45 der ersten Filtermaterialbahnlage 44 gebildet. Diese Außenwicklung umgibt das an das Metallfaservlies 52 angesinterte Drahtgewebe 54. Die erste Lage 44 der Filtermaterialbahn 42 ist um eine Strecke, die größer ist als der Außenumfang des Wickelkörpers 38, länger als die zweite Lage 46, so daß das außenliegende Ende der ersten Lage 44 die sechste Wickellage um den in Fig. 4 bei 60 angedeuteten Winkelbereich überragt. Zur besseren Handhabung des Wickelkörpers 38 ist dieser von einem Drahtgewebe-Zylinder 62 als Außenmantel umschlossen. Wie man anhand von Fig. 4 ferner erkennen kann, sind die Übergangsbereiche zwischen den beiden Abschnitten der zweiten Filtermaterialbahnlage 42 sowie das freie Ende von dessen zweitem Abschnitt 50 in Umfangsrichtung versetzt zueinander und versetzt zu dem innenliegenden Wickelbeginn des innenliegenden Ende 51 des Wickelkörpers 38 angeordnet.

Der Filterelement-Wickelkörper 38 ist oben anhand der dort angegebenen Materialien und Drahtgewebe beschrieben. Die Anzahl, Art und sowie Größe der Lagen bzw. deren Abschnitte sowie die Spezifikation der einzelnen Drahtgewebe bzw. Metallfaservliese ist hier lediglich beispielhaft angegeben; diese Parameter werden nicht zuletzt durch die Bau- und Wirkungsweise sowie den Einsatz des Gasgenerators 10 bestimmt.

Bezüglich Fig. 4 sei hier noch angemerkt, daß in dieser Figur der Wickelkörper 38 und die einzelnen Lagen dicker gezeichnet sind, um den Aufbau des Wickelkörpers 38 in seinen Einzelheiten besser darstellen zu können. Auch die Zwischenräume 64 zwischen den einzelnen Wickellagen sind größer dargestellt. Normalerweise müßten sich benachbarte Wickellagen berühren. Schließlich entspricht auch der Abstand der Innenfläche des Wickelkörpers 38 zum Innenrohr 12 und der Abstand der Außenfläche des Wickelkörpers 38 bzw. des zylindrischen Drahtgewebes 62 zum Außenrohr 14 nicht den tatsächlichen Verhältnissen. Vielmehr liegt der Wickelkörper 38 inkl. Drahtgewebe 62 an dem Innen- und dem Außenrohr 12 bzw. 14 im wesentlichen ganzflächig an.

Zum Zusammenbauen des in Fig. 1 dargestellten Gasgenerators 10 wird wie folgt verfahren. Zunächst wird das Außenrohr 14 mit einem der Deckel 16,18 vercrimpt. Anschließend wird das Innenrohr 12 in die Ausnehmung 20 dieses Deckels 16 bzw. 19 eingesetzt. In den Ringraum 34 wird danach der Wickelkörper 38 eingeführt. Dabei kann wegen der ungleichmäßigen Wanddicke des Wickelkörpers 38 das Innenrohr 12 an seinem freien Ende in eine exzentrische Lage relativ zum Außenrohr 14 gelangen. Um die Konzentrizität beider Rohre wiederherzustellen, wird in den Ringraum 34 ein Zentrierring (in den Figuren nicht dargestellt) eingesetzt. Anschließend wird zum Befüllen des Innenrohres 12 mit den Pellets 24 der zweite Deckel 18 bzw. 16 eingesetzt und das Außenrohr 14 mit dem Deckel durch Vercrimpen verbunden. Der Zentrierring verbleibt in dem Ringraum 34 zwischen den beiden Rohren 12,14. Beim Zentrieren des Innenrohres 12 wird der Wickelkörper 38 gequetscht und paßt sich dem Ringraum 34 entsprechend an.

Der Filterelement-Wickelkörper 38 wird radial von innen nach außen von dem zu reinigenden Gasstrom durchströmt. Dabei wirkt auf den Wickelkörper 38 radial auswärts ein Druck. Aufgrund dieses Druckes wird der Wickelkörper 38 gegen das Außenrohr 14 gedrückt. Da die Filtermaterialbahn 42 derart lose bzw. locker aufgewickelt ist, daß die einzelnen Wickellagen zwar dicht aufeinanderfolgen, zwischen ihnen aber noch ein gewisser, wenn auch nur geringer Abstand (Zwischenraum 64) besteht, führt der nach außen wirkende Druck zu einer Aufweitung des Wickelkörpers 38 im Innendurchmesser. Die Folge davon ist eine gewisse Abwicklung des Wickelkörpers 38 im Bereich des innenliegenden Endes 51, was wiederum zur Folge hat, daß die einzelnen Wickellagen verdichtet werden. Die Zwischenräume 64 zwischen den einzelnen Wickellagen verengen sich also, was eine verbesserte Filterwirkung auf die teilweise axial durch den Wickelkörper 38 strömenden Gase zur Folge hat. Die Materialdurchlässigkeit des Wickelkörpers 38 nimmt insgesamt von innen nach außen ab. Aufgrund der Verdichtung des Wickelkörpers 38 mit steigendem Verbrennungsgasdruck ist ein Filterelement für einen Gasgenerator geschaffen, dessen Durchlässigkeit druckabhängig ist, wobei die Durchlässigkeit bei niedrigerem Druck größer ist als gegen Ende des Verbrennungsprozesses. Zu Beginn des Verbrennungsprozesses stellt der Filterelement-Wickelkörper 38 also einen geringeren Widerstand für den Gasstrom dar, als dies gegen Ende der Verbrennung der Fall ist. Dieser Effekt ist neben einem zunehmenden Zusetzen des Filterelementes mit zurückgehaltenen nichtgasförmigen Verbrennungsprodukten auch auf die Verdichtung des Wickelkörpers 38 zurückzuführen.

## Patentansprüche

1. Filtervorrichtung zum Filtern einer Gasströmung, insbesondere zum Filtern der von einem Gasgenerator für ein Aufprallschutzkissen erzeugten Gase, mit
- einem von dem Gas durchströmbaren Filterelement (38), das mehrere in Strömungsrichtung aufeinanderfolgende Filtermateriallagen unterschiedlicher Durchlässigkeit aufweist,
**dadurch gekennzeichnet,**
- daß das Filterelement ein Wickelkörper (38) ist, der durch Wickeln einer Filtermaterialbahn (42) gebildet ist, und
- daß die Filtermaterialbahn (42) mehrere Filtermaterialabschnitte (44,46,48,50) unterschiedlicher Durchlässigkeit aufweist.

2. Filtervorrichtung nach Anspruch 1, dadurch gekennzeichnet, daß die Filtermaterialbahn (42) derart gewickelt ist, daß der Wickel bei Durchströmung des Gases radial von innen nach außen im wesentlichen unter Beibehaltung seines Außendurchmessers verdichtbar ist.

3. Filtervorrichtung nach Anspruch 1, dadurch gekennzeichnet, daß die Längen der Filtermaterialabschnitte (44-50) jeweils derart bemessen sind, daß sich jeder Filtermaterialabschnitt (44-50) auch bei verdichtetem Wickelkörper (38) über mindestens 360° erstreckt.

4. Filtervorrichtung nach einem der Ansprüche 1 bis 3, dadurch gekennzeichnet, daß die Filtermaterialbahn (42) eine erste (44) und eine zweite Filtermateriallage (46) aufweist, daß die erste Lage (44) durchgehend aus einem ersten Filtermaterialabschnitt besteht und daß die zweite Lage (46) ein zweites Filtermaterial aufweist.

5. Filtervorrichtung nach Anspruch 4, dadurch gekennzeichnet, daß die beiden Lagen (44,46) der Filtermaterialbahn (42) im Bereich des Endes der in Längserstreckung der Filtermaterialbahn (42) kürzeren Lage (46) miteinander fest verbunden sind.

6. Filtervorrichtung nach Anspruch 4 oder 5, dadurch gekennzeichnet, daß die zweite Lage (46) mehrere Filtermaterialabschnitte (48,50) unterschiedlicher Durchlässigkeit aufweist, die in Längserstreckung der Filtermaterialbahn (42) nebeneinanderliegend angeordnet sind.

7. Filtervorrichtung nach Anspruch 6, dadurch gekennzeichnet, daß jeweils benachbarte Filtermaterialabschnitte (48,50) der zweiten Lagen (46) fest miteinander verbunden sind.

8. Filtervorrichtung nach Anspruch 7, dadurch gekennzeichnet, daß das freie Ende eines außenliegenden Filtermaterialabschnittes (48,50) der zweiten Lage (46) mit dem Ende der ersten Lage (44) fest verbunden ist.

9. Filtervorrichtung nach einem der Ansprüche 6 bis 8, dadurch gekennzeichnet, daß die Filtermaterialabschnitte (48,50) der zweiten Lage (46) mit den Kanten aneinanderstoßend miteinander verbunden sind.

10. Filtervorrichtung nach einem der Ansprüche 6 bis 9, dadurch gekennzeichnet, daß die Filtermaterialbahn (42) derart gewickelt ist, daß sich jeder Filtermaterialabschnitt (48,50) der zweiten Lage (46) auch nach der Gasdurchströmung des Wickelkörpers (38) noch über mindestens 380° erstreckt, und daß die Übergangsbereiche der Filtermaterialabschnitte bei aufgewickelter Filtermaterialbahn (42) in Umfangsrichtung versetzt zueinander angeordnet sind.

11. Filtervorrichtung nach einem der Ansprüche 4 bis 10, dadurch gekennzeichnet, daß die beiden Lagen (44,46) an einem ihrer in Längserstreckung liegenden Enden miteinander fest verbunden sind und daß die erste Lage (44) um mindestens die Länge des Außenumfangs des Wickelkörpers (38) länger ist als die zweite Lage (46).

12. Filtervorrichtung nach einem der Ansprüche 4 bis 11, dadurch gekennzeichnet, daß die Filtermaterialbahn (42) derart gewickelt ist, daß die erste Lage (44) aus durchgehendem Filtermaterial bei jeder Umwicklung radial innenliegend angeordnet ist.

13. Filtervorrichtung nach einem der Ansprüche 1 bis 12, dadurch gekennzeichnet, daß der Wickelkörper (38) von einem zylindrischen gasdurchlässigen Mantel umgeben ist.

14. Filtervorrichtung nach Anspruch 13, dadurch gekennzeichnet, daß der Mantel aus einem zu einem Hohlzylinder geformten Filtermaterialkörper (62) aus vorzugsweise Edelstahl besteht.

15. Filtervorrichtung nach Anspruch 13, dadurch gekennzeichnet, daß der Mantel ein mit Löchern in seiner Wandung versehenes hohlzylindrisches Gehäuse (Außenrohr 14) ist.

16. Filtervorrichtung nach Anspruch 13, dadurch gekennzeichnet, daß der Mantel einen zu einem Hohlzylinder geformten Filtermaterialkörper (62) und ein hohlzylindrisches Gehäuse (Außenrohr 14) mit Löchern in seiner Wandung aufweist, das den Filtermaterialkörper (62) umgibt.

17. Filtervorrichtung nach einem der Ansprüche 1 bis 16, dadurch gekennzeichnet, daß die Filtermaterialbahn (42) Drahtgewebeabschnitte (45,49,54) unterschiedlicher Maschenweite aufweist.

18. Filtervorrichtung nach Anspruch 17, dadurch gekennzeichnet, daß die Filtermaterialbahn (42) zusätzlich ein oder mehrere Metallfaservliesabschnitte (52) aufweist.

19. Filtervorrichtung nach Anspruch 18, dadurch gekennzeichnet, daß die Metallfaservliesabschnitte zur Verstärkung jeweils mit Drahtgewebe (54) verbunden sind.

20. Filtervorrichtung nach einem der Ansprüche 17 bis 19, dadurch gekennzeichnet, daß sämtliche Drahtgewebe (45,49,54) und - sofern vorhanden - die Metallfasern der Metallfaservliese (52) aus Edelstahl bestehen.

21. Filtervorrichtung nach Anspruch 19 und einem der Ansprüche 6 bis 16, dadurch gekennzeichnet, daß die erste Lage (44) der Filtermaterialbahn (42) aus einem ersten Drahtgewebe (45) mit einer ersten Maschenweite besteht, daß die zweite Lage (46) einen ersten Abschnitt (48) aus einem zweiten Drahtgewebe (49) aufweist, dessen Maschenweite geringer ist als diejenige des ersten Drahtgewebes (45) der ersten Lage (44), und einen zweiten Abschnitt (50) mit einem Metallfaservlies (52) aufweist, an das ein drittes Drahtgewebe (54) mit einer Maschenweite angesintert ist, die geringer ist als diejenige des zweiten Drahtgewebes des ersten Abschnitts (48) der zweiten Lage (46) der Filtermaterialbahn (42).

22. Filtervorrichtung nach Anspruch 21, dadurch gekennzeichnet, daß die Abmessungen der Filtermaterialbahnlagen (44,46) und deren Abschnitte (48, 50) derart bemessen sowie angeordnet sind und die Filtermaterialbahn (42) derart gewickelt ist, daß sich - jeweils von dem inneren Ende (51) des Wickelkörpers (38) aus betrachtet - das erste Drahtgewebe (49) über mehr als vier Wickellagen, nämlich die erste, die dritte, die fünfte und die siebte Wickellage, das zweite Drahtgewebe (49) über mehr als zwei Wickellagen, nämlich die zweite und die vierte Wickellage und das Metallfaservlies (52) mit dem dritten Drahtgewebe (54) über mehr als eine Wickellage, nämlich die sechste Wickellage, erstreckt.

## Claims

1. Filter apparatus for filtering of a gas flow, in particular for the filtering of the gases produced by a gas generator for an impact protecting cushion, the apparatus having
- a filter element (38) through which the gas can flow, which element has several filter material layers of different penetrability following one another in the flow direction,
**characterised in that**
- the filter element is a wound body (38) which is formed by winding of a web (42) of filter material, and
- the web (42) of filter material has several sections of filter material (44,46,48,50) of different penetrability.

2. Filter apparatus according to claim 1, **characterised in that** the web (42) of filter material is wound so that the winding is compressible while essentially maintaining its external diameter on throughflow of the gas radially from inside to outside.

3. Filter apparatus according to claim 1, **characterised in that** the lengths of the sections (44-50) of filter material are measured so that each filter element section (44-50) is also extended over at least 360° with the compacted wound body (38).

4. Filter apparatus according to one of claims 1 to 3, **characterised in that** the web (42) of filter material has a first filter material layer (44) and a second filter material layer (46), that the first layer (44) consists interruptedly of a first section of filter material and that the second layer (46) has a second filter material.

5. Filter apparatus according to claim 4, **characterised in that** the two layers (44,46) of the web (42) of filter material are connected firmly with one another in the region of the end of the layer (46) which is shorter in the longitudinal direction of the filter material web (42).

6. Filter apparatus according to claim 4 or 5, **characterised in that** the second layer (46) has several sections (48,50) of filter material of different penetrability which are arranged side-by-side in the longitudinal direction of the web (42) of filter material.

7. Filter apparatus according to claim 6, **characterised in that** respective neighbouring sections (48,50) of the second layer (46) of filter material are connected firmly with one another.

8. Filter apparatus according to claim 7, **characterised in that** the free end of one section (48,50) of the second layer (46) of filter material lying externally is connected firmly with the end of the first layer (44).

9. Filter apparatus according to one of claims 6 to 8, **characterised in that** the sections (48,50) of filter material of the second layer (46) are connected with one another with the edges abutting one another.

10. Filter apparatus according to one of claims 6 to 9, **characterised in that** the web (42) of filter material is so wound that each section (48,50) of filter material of the second layer (46) still also extends over at least 380° after gas throughflow of the wrapped body (38), and that the transition regions of the sections of filter material are arranged with wound filter material web (42) displaced in the peripheral direction.

11. Filter apparatus according to one of claims 4 to 10, **characterised in that** the two layers (44,46) are connected firmly with one another at one of their ends extending in the longitudinal direction and that the first layer (44) is longer than the second layer (46) by at least the length of the external periphery of the wound body (38).

12. Filter apparatus according to one of claims 4 to 11, **characterised in that** the web (42) of filter material is wound so that the first layer (44) of continuous filter material is arranged lying radially internally at each turn.

13. Filter apparatus according to one of claims 1 to 12, **characterised in that** the wound body (38) is surrounded by a cylindrical gas permeable sleeve.

14. Filter apparatus according to claim 13, **characterised in that** the sleeve consists of a filter material body (62) of preferably stainless steel shaped to form a hollow cylinder.

15. Filter apparatus according to claim 13, **characterised in that** the sleeve is a hollow cylindrical housing (external tube 14) provided with holes in its wall.

16. Filter apparatus according to claim 13, **characterised in that** the sleeve has a body (62) of filter material shaped to form a hollow cylinder and a hollow cylindrical housing (external tube 14) with holes in its wall, which surrounds the body (62) of filter material.

17. Filter apparatus according to one of claims 1 to 16, **characterised in that** the web (42) of filter material has wire mesh sections (45,49,54) of different mesh size.

18. Filter apparatus according to claim 17, **characterised in that** the web (42) of filter material has additionally one or several metal fibre fleece sections (52).

19. Filter apparatus according to claim 18, **characterised in that** the metal fibre fleece sections are respectively connected with wire meshes (54) for reinforcement.

20. Filter apparatus according to one of claims 17 to 19, **characterised in that** the combined wire meshes (45,49,54) and - insofar as they are present - the metal fibres of the metal fibre fleeces (52) consists of stainless steel.

21. Filter apparatus according to claim 19 and one of claims 6 to 16, **characterised in that** the first layer (44) of the web (42) of filter material consists of a first wire mesh (45) with a first mesh size, that the second layer (46) has a first section (48) formed of a second wire web whose mesh width is less than that of the first wire mesh (45) of the first layer (44) and a second section (50) with a metal fibre fleece (52) to which a third wire mesh (54) is sintered which has a mesh size which is less than that of the second wire mesh of the first section (48) of the second layer (46) of the web (42) of filter material.

22. Filter apparatus according to claim 21, **characterised in that** the dimensions of the layers (44,46) of filter material and the sections thereof (48,50) are so measured and arranged and the web (42) of filter material is so is wound that the first wire mesh (49) - seen in each case from the inner end (31) of the wound body (38) - extends over more than four wound layers, namely the first, the third, the fifth and the seventh wound layer, the second wire mesh (49) extends over more than two wound layers, namely the second and the fourth wound layers and the metal fibre fleece (52) with the third wire mesh (54) extends over more than one wound layer, namely the sixth wire layer.

## Revendications

1. Dispositif de filtrage d'un courant de gaz, en particulier pour le filtrage des gaz produits par un générateur de gaz pour un coussin gonflable, comprenant
- un élément de filtrage (38) susceptible d'être traversé par le gaz et présentant plusieurs couches de matière filtrante de perméabilités différentes, se succédant dans le sens de passage du gaz,
caractérisé par le fait
- que l'élément de filtrage est une bobine (38) formée par enroulement d'une bande de matière filtrante (42), et
- que la bande de matière filtrante (42) présente plusieurs sections de matière filtrante (44, 46, 48, 50) de perméabilités différentes.

2. Dispositif de filtrage suivant la revendication 1, caractérisé par le fait que la bande de matière filtrante (42) est enroulée de manière que la bobine, lorsqu'elle est traversée par le gaz, puisse se densifier tout en conservant essentiellement son diamètre extérieur.

3. Dispositif de filtrage suivant la revendication 1, caractérisé par le fait que les longueurs des sections de matière filtrante (44-50) sont choisies de manière que chaque section de matière filtrante (44-50) s'étende sur au moins 360°, même lorsque la bobine (38) est densifiée.

4. Dispositif de filtrage suivant l'une des revendications 1 à 3, caractérisé par le fait que la bande de matière filtrante (42) présente une première couche (44) et une deuxième couche (46) de matière filtrante, que la première couche (44) est constituée en continu d'une première section de matière filtrante et que la deuxième couche (46) présente une deuxième matière filtrante.

5. Dispositif de filtrage suivant la revendication 4, caractérisé par le fait que les deux couches (44, 46) de la bande de matière filtrante (42) sont reliées solidement entre elles dans la zone de l'extrémité de la couche (46) plus courte dans le sens de la longueur de la bande de matière filtrante (42).

6. Dispositif de filtrage suivant la revendication 4 ou 5, caractérisé par le fait que la deuxième couche (46) présente plusieurs sections de matière filtrante (48, 50) de perméabilités différentes qui sont disposées les unes à la suite des autres dans le sens de la longueur de la bande matière filtrante (42).

7. Dispositif de filtrage suivant la revendication 6, caractérisé par le fait que des sections de matière filtrante (48, 50) de la deuxième couche (46) voisines l'une de l'autre sont reliées solidement entre elles.

8. Dispositif de filtrage suivant la revendication 7, caractérisé par le fait que l'extrémité libre d'une section de matière filtrante (48, 50) extérieure de la deuxième couche (46) est reliée solidement à l'extrémité de la première couche (44).

9. Dispositif de filtrage suivant l'une des revendications 6 à 8, caractérisé par le fait que les sections de matière filtrante (48, 50) de la deuxième couche (46) sont reliées entre elles à bords aboutés.

10. Dispositif de filtrage suivant l'une des revendications 6 à 9, caractérisé par le fait que la bande de matière filtrante (42) est enroulée de manière que chaque section de matière filtrante (48, 50) de la deuxième couche (46) s'étende encore sur au moins 380° également après passage du gaz à travers la bobine (38), et que les zones de raccordement des sections de matière filtrante sont, sur la bande de matière filtrante (42) enroulée, décalées réciproquement dans la direction périphérique.

11. Dispositif de filtrage suivant l'une des revendications 4 à 10, caractérisé par le fait que les deux couches (44, 46) sont reliées solidement entre elles à l'une de leurs extrémités disposées dans le sens de la longueur et que la première couche (44) est plus longue que la deuxième couche (46) d'une valeur correspondant au moins au périmètre extérieur de la bobine (38).

12. Dispositif de filtrage suivant l'une des revendications 4 à 11, caractérisé par le fait que la bande de matière filtrante (42) est enroulée de manière que la première couche (44) en matière filtrante continue soit disposée radialement vers l'intérieur dans chaque enroulement.

13. Dispositif de filtrage suivant l'une des revendications 1 à 11 caractérisé par le fait que la bobine (38) est entourée d'une enveloppe cylindrique perméable aux gaz.

14. Dispositif de filtrage suivant la revendication 13, caractérisé par le fait que l'enveloppe est constituée par un corps de matière filtrante (62), de préférence en acier spécial, conformé en cylindre creux.

15. Dispositif de filtrage suivant la revendication 13, caractérisé par le fait que l'enveloppe est constituée par un boîtier cylindrique creux (tube extérieur 14) muni de trous dans sa paroi.

16. Dispositif de filtrage suivant la revendication 13, caractérisé par le fait que l'enveloppe comprend un corps de matière filtrante (62) conformé en cylindrique creux et une enveloppe (tube extérieur 14) en cylindre creux qui comporte des trous dans sa paroi et entoure le corps de matière filtrante (62).

17. Dispositif de filtrage suivant l'une des revendications 1 à 16, caractérisé par le fait que la bande de matière filtrante (42) comprend des sections de toile métallique (42, 49, 54) avec des mailles de largeurs différentes.

18. Dispositif de filtrage suivant la revendication 17, caractérisé par le fait que la bande de matière filtrante (42) comprend en plus une ou plusieurs sections de non-tissé de fibres métalliques (52).

19. Dispositif de filtrage suivant la revendication 18, caractérisé par le fait que les sections de non-tissé de fibres métalliques sont reliées respectivement à une toile métallique (54) en vue du renforcement.

20. Dispositif de filtrage suivant l'une des revendications 17 à 19, caractérisé par le fait que toutes les toiles métalliques (45, 49, 54) et les fibres métalliques des non-tissés de fibres métalliques (52), dans la mesure où ces derniers sont prévus, sont en acier spécial.

21. Dispositif de filtrage suivant la revendication 19 et l'une des revendications 6 à 16, caractérisé par le fait que la première couche (44) de la bande de matière filtrante (42) est formée d'une première toile métallique (45) ayant une première largeur de mailles, et que la deuxième couche (46) présente une première section (48) en une deuxième toile métallique (49) dont les mailles sont de largeur inférieure à celle des mailles de la première toile métallique (45) de la première couche (44), et une deuxième section (50) avec un non-tissé de fibres métalliques (52) sur lequel est frittée une troisième toile métallique (54) ayant des mailles d'une largeur inférieure à celle des mailles de la deuxième toile métallique de la première section (48) de la deuxième couche (46) de la bande de matière filtrante (42).

22. Dispositif de filtrage suivant la revendication 21, caractérisé par le fait que les couches de bande matière filtrante (44, 46) et les sections (48, 50) de ces couches sont dimensionnées et disposées et la bande de matière filtrante (42) est bobinée de telle manière que, vues respectivement de l'extrémité intérieure (51) de la bobine (38), la première toile métallique (45) s'étend sur plus de quatre couches d'enroulement, à savoir la première, la troisième, la cinquième et la septième couches d'enroulement, la deuxième toile métallique (49) s'étend sur plus de deux couches d'enroulement, à savoir la deuxième et la quatrième couches d'enroulement, et le non-tissé de fibres métalliques (52) avec la troisième toile métallique (54) s'étend sur plus d'une couche d'enroulement, à savoir la sixième couche d'enroulement.
